**Europäisches Patentamt**

**European Patent Office**

**Office européen des brevets**

(11) Veröffentlichungsnummer: **0 167 966**
**A2**

# (12) EUROPÄISCHE PATENTANMELDUNG

(21) Anmeldenummer: **85108167.9**

(22) Anmeldetag: **02.07.85**

(51) Int. Cl.⁴: **H 01 M 10/39**
**H 01 M 4/80**

(30) Priorität: **13.07.84 DE 3425859**

(43) Veröffentlichungstag der Anmeldung:
**15.01.86 Patentblatt 86/3**

(84) Benannte Vertragsstaaten:
**AT BE FR GB IT NL**

(71) Anmelder: **BROWN, BOVERI & CIE Aktiengesellschaft**
**Kallstadter Strasse 1**
**D-6800 Mannheim 31(DE)**

(72) Erfinder: **Mennicke, Stefan, Dr. Dipl.-Chem.**
**Türkisweg 27**
**D-6906 Leimen-Gauangelloch(DE)**

(72) Erfinder: **Reiss, Karl**
**Panoramastrasse 6**
**D-6909 Mühlhausen-Rettigheim(DE)**

(74) Vertreter: **Kempe, Wolfgang, Dr. et al,**
**c/o Brown, Boveri & Cie AG Postfach 351**
**D-6800 Mannheim 1(DE)**

(54) **Verfahren zur Herstellung einer Speicherzelle.**

㉗ Ziel der Erfindung ist es, die Schwefelelektrode einer Speicherzelle (10) auf der Basis von Natrium und Schwefel mit einem Anodenraum (15) und einem Kathodenraum (14), die durch einen Festelektrolyten (13) voneinander getrennt sind, so zu verbessern, daß ein kleinerer Ohmscher Widerstand erzielt wird. Erfindungsgemäß wird ein Verbundkörper (1) aus Fasersträngen oder Fasermatten )2) aufgeschichtet und durch einen inerten oder verkokbaren Werkstoff so gefestigt, daß er in Teilstücke (30) aufgeschnitten werden kann, ohne zu zerfallen, jedoch seine Elastizität nicht verliert. Die Fasern werden so angeordnet, daß sie im wesentlichen parallel zueinander verlaufen. Von dem Verbundkörper (1) abgetrennte Teilstücke (30) werden in die Kathodenräume (14) von Speicherzellen (10) eingesetzt, derart, daß die Fasern senkrecht zur Längsachse der Festelektrolyten (13) der becherförmigen Speicherzellen, insbesondere radial nach außen verlaufen. Die Verkokung des Werkstoffes, der den Verbundkörper (1) festigen hilft, wird innerhalb des metallischen Gehäuses (12) der Speicherzelle (10) durchgeführt. Das Teilstück (30) wird mittels eines Phenolharzes an dem metallischen Gehäuse (12) angeheftet und anschließend mit Schwefel getränkt.

Fig. 2

B R O W N , B O V E R I & C I E AKTIENGESELLSCHAFT
Mannheim                                          05. Juli 1984
Mp-Nr.608/84                                      ZPT/P1-Kr/Kn

## Verfahren zur Herstellung einer Speicherzelle

Die Erfindung bezieht sich auf die Herstellung einer Speicherzelle gemäß dem Oberbegriff des Patentanspruches 1.

Solche elektrochemischen Speicherzellen eignen sich sehr gut zum Aufbau von Speicherbatterien, die als Energiequellen von Elektrofahrzeugen vorgesehen sind.

Ein spezielles Beispiel für solche Speicherzellen sind die wiederaufladbaren Speicherzellen auf der Basis von Natrium und Schwefel, die einen Festelektrolyten aus Betaaluminiumoxid besitzen, der ihren Anodenraum von dem Kathodenraum trennt. Ein Vorteil dieser elektrochemischen Speicherzellen besteht darin, daß beim Laden keine elektrochemischen Nebenreaktionen auftreten. Der Grund dafür ist, daß nur Natriumionen durch den Festelektrolyten gelangen können. Die Stromausbeute einer solchen Natrium/Schwefel-Speicherzelle liegt daher bei 100 %. Bei diesen elektrochemischen Speicherzellen ist das Verhältnis von Energieinhalt zum Gesamtgewicht einer Speicherzelle im Vergleich zum Bleiakkumulator sehr hoch, da die Reaktionsstoffe leicht sind und bei den elektrochemischen Reaktionen viel Energie frei wird. Aus der US-PS 4169120 ist eine elektrochemische

05. Juli 1984

Speicherzelle auf der Basis von Natrium und Schwefel bekannt. Der Kathodenraum dieser Speicherzelle ist mit Graphitfasern ausgefüllt, die sehr kurz geschnitten und mit einem Harz vermischt sind. Eine bestimmte Orientierungsrichtung weisen die Graphitfasern innerhalb des Kathodenraums nicht auf. Das so gebildete Matrixmaterial ist relativ unelastisch, so daß kein ausreichender Kontakt des Materials mit dem Festelektrolyten einerseits sowie dem kathodischen Stromabnehmer andererseits gegeben ist. Eine relativ geringe Leitfähigkeit dieser Speicherzelle ist das Resultat hiervon.

Der Erfindung liegt deshalb die Aufgabe zugrunde ein Verfahren aufzuzeigen, mit dem eine Speicherzelle, insbesondere ihre Schwefelelektrode so optimiert werden kann, daß eine höhere Schwefelnutzung und ein kleinerer ohmscher Widerstand sowie eine geringere Polarisation erzielt werden.

Diese Aufgabe wird erfindungsgemäß durch die kennzeichnenden Merkmale des Patentanspruches 1 gelöst.

Erfindungsgemäß werden für die Ausbildung der Schwefelelektrode Graphitfasern auf Pechfaserbasis verwendet. Hierdurch wird eine Verringerung des ohmschen Widerstandes erzielt und die Kosten der Herstellung wesentlich gesenkt. Durch die spezielle Ausrichtung der Fasern, insbesondere ihrer radiale Orientierung bezogen auf die Längsachse der Speicherzelle, wird eine sehr gute Wiederaufladbarkeit der Speicherzelle erreicht. Gleichzeitig wird die Polarisation verringert.

Der Verbundkörper aus dem das in den Kathodenraum eingefüllte Werkstück ausgeschnitten ist, wird aus einer
Vielzahl von aufeinandergeschichteten Graphitfadersträngen oder aus mehreren aufeinander gelegten Matten aus
Graphitfasern aufgebaut und anschließend mittels eines
inerten oder verkokbaren Werkstoffes in sich gefestigt.
Dies kann während eines kontinuierlichen Prozesses erfolgen. Die Fertigung des Verbundkörpers kann jedoch
auch diskontinuierlich durchgeführt werden. Dabei wird
darauf geachtet, daß der Verbundkörper gerade eine solche Festigkeit erlangt, daß Teilstücke in Form von
Scheiben davon abgetrennt werden können, ohne daß er in
die einzelnen Faserelemente auseinanderfällt. Ferner ist
der Verbundkörper so ausgebildet, daß die abgetrennten
scheibenförmigen Teilstücke durch Verformung so vorgespannt werden können, daß sie nach ihrem Einsetzen in
den Kathodenraum einen guten elektrischen Kontakt mit
dem dort angeordneten Stromkollektor und dem Zellgehäuse
haben. Der Verbundkörper kann aus Strängen oder Matten
gebildet werden, die aus Graphitfasern auf Pechbasis gefertigt sind. Der Verbundkörper wird mittels eines Harzes, Fasern, einem Gewebe, Folien oder Papier gefestigt,
welche(s) zwischen den Fasersträngen bzw. Matten des
Verbundkörpers angeordnet wird (werden).

Der Verbundkörper kann auch durch Glasfasern, ein Glasfasergewebe, Glasfaserpapier oder durch Drähte aus·Molybdän, die durch den Verbundkörper hindurchgezogen werden, oder durch Drähte, die aus einer korrossionsbeständigen Legierung mit einem hohen Chromanteil gefertigt
sind und ebenfalls durch den Verbundkörper gezogen werden, in sich gefestigt werden.

Bei einer bevorzugten Ausführungsform der Erfindung werden Graphitfasern mit einem Duromer, insbesondere einem Phenolharz befeuchtet. Hieraus wird ein entsprechender Körper geformt, von dem sich später sehr gut Teilstücke abtrennen lassen. Nach dem Aushärten des Harzes werden von diesem Körper Teilstücke abgetrennt, in den Kathodenraum eingesetzt und mit der Wand des Zellgehäuses verklebt. Anschließend wird das den Kathodenraum ausfüllende Fasermaterial bei 600 bis 1000 °C vollständig verkokt. Nach dieser Wärmebehandlung liegt ein Verbundmaterial aus Graphitfasern oder Glaskohlenstoff vor. Der Schwefel wird dann flüssig, vorzugsweise durch Schleuderguß in das Zellgehäuse eingebracht.

Die Erfindung wird nachfolgend anhand von Zeichnungen erläutert.

Es zeigen:

Figur 1:     Einen erfindungsgemäß aufgeschichteten Verbundkörper aus Graphitfasern auf Pechbasis,

Figur 2:     eine elektrochemische Speicherzelle.

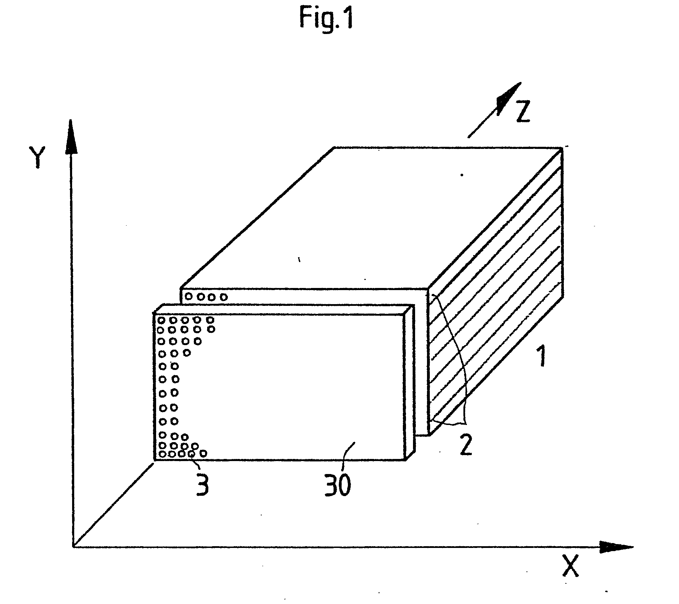

Figur 1 zeigt einen Verbundkörper 1 aus Graphitfasern, von dem das Kathodenmaterial zur Bildung der Schwefelelektrode abgetrennt wird. Der in Figur 1 dargestellte Verbundkörper 1 ist aus mehreren aufeinandergeschichteten Matten 2 gebildet. Diese sind aus Graphitfasern auf Pechbasis hergestellt. Zur Herstellung der Matten 2 werden die Fasern so angeordnet, daß ihre Längsachsen im wesentlichen zueinander parallel verlaufen. Zumindest müssen die Fasern so angeordnet sein, daß etwa 50 % davon gleiche Laufrichtung aufweisen. Bei dem hier darge stellten Ausführungsbeispiel sind die Fasern 3 so angeordnet, daß sie parallel zur Z-Achse des in Figur 1 dargestellten rechtwinkligen Koordinatensystems verlaufen.
Die den Verbundkörper 1 bildenden Matten 2 werden so
aufeinander gesetzt, daß die Fasern aller Matten 2 im
wesentlichen parallel zur Z-Achse verlaufen. Bei dem
hier dargestellten Ausführungsbeispiel wird der Verbundkörper 1 aus Matten 2 gebildet, die im Handel unter dem
Namen "Thornel VMA" erhältlich sind. Jede der verwendeten Matten 2 weist eine Abmessung von 20x20x2 cm$^3$ auf.
Im Anschluß an das Aufschichten der Matten 2 wird der so
gebildete Verbundkörper mit einer Lösung von 50 Gramm
Phenolharz, das in einem Liter Äthanol gelöst ist, getränkt. Die überschüssige Lösung wird durch Ausdrücken
des Verbundkörpers 1 entfernt. Mittels einer Wärmebehandlung bei etwa 160 Grad Celsius wird das Äthanol abgedampft und das Phenolharz vernetzt. Während der Wärmebehandlung wird der Verbundkörper durch leichtes Drücken
auf eine Höhe von 11 cm gebracht. Im Anschluß an die
Wärmebehandlung wird zur Ausbildung einer Speicherzelle
von diesem Block ein Teilstück, insbesondere eine Scheibe 30 mit einer Dicke von 0,5 cm abgeschnitten. Die
Schnittfläche verläuft parallel zur der XY-Ebene.

Anstelle von Matten können auch Stränge aus Graphitfasern zur Bildung des Verbundkörpers 1 verwendet werden.
Hierfür sind besonders Pechfasertaue geeignet, die im
Handel unter der Bezeichnung "Sigratil p-t 201" erhältlich sind. Bei diesen Pechfasertauen liegen die Fasern
im wesentlichen parallel. Es treten kaum Rückstellkräfte
bei der Verdichtung des Faserbündels auf. Zur Herstellung eines Verbundkörpers 1 werden diese Faserstränge
nicht in eine Phenolharzlösung getaucht, sondern nur mit
dieser Lösung eingesprüht. Zur Bildung des Verbundkör pers 1 werden dann die hierfür erforderliche Anzahl von Faserbündeln aufeinandergeschichtet und durch eine geeignete Wärmebehandlung miteinander verklebt.

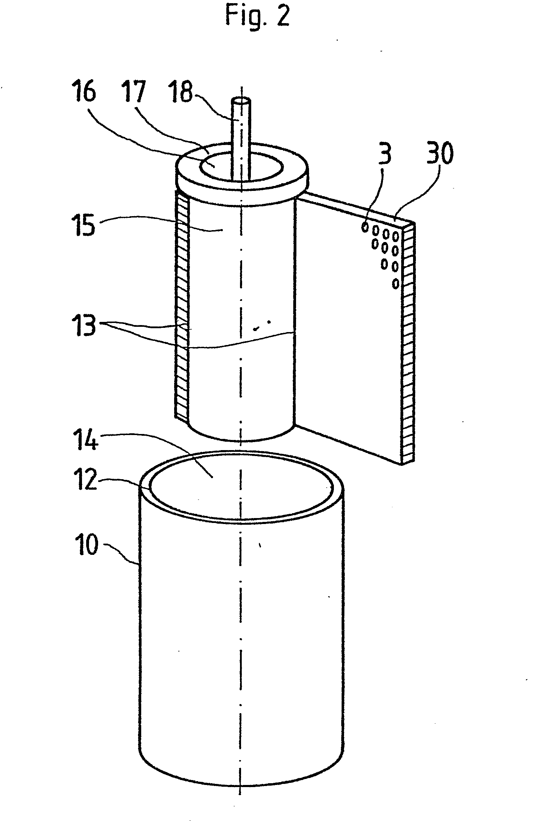

Figur 2 zeigt schematisch eine Speicherzelle 1, in deren Kathodenraum 14 die von dem in Figur 1 dargestellten Verbundkörper 1 abgeschnittene Scheibe 30 zur Bildung der Schwefelelektrode angeordnet werden soll. Bei der hier dargestellten becherförmigen Speicherzelle 1 ist der Kathodenraum zwischen dem Festelektrolyten 13 und dem becherförmigen metallischen Gehäuse 12, das die Speicherzelle nach außenhin begrenzt, angeordnet. Er wird durch einen Zwischenraum 14 gebildet, der zwischen dem Festelektrolyten 13 und dem Gehäuse 12 rundrum angeordnet ist. Die Scheibe 30 wird so innerhalb des Kathodenraums angeordnet, daß die Längsachsen ihrer Fasern senkrecht zur Längsachse des Festelektrolyten 13, insbesondere radial nach außen gerichtet sind. Die Dicke der Scheibe 30 ist so gewählt, daß der Kathodenraum 14 vollständig ausgefüllt wird und die Scheibe 30 direkt an dem Festelektrolyten 13 und an der Innenfläche des metallischen Gehäuses 12 anliegt und einen elektrischen Kontakt damit hat. Um die Scheibe 30 in der oben beschriebenen Weise in das Gehäuse 12 einführen zu können, wird diese um einen Dorn gewickelt, auf dessen Oberfläch ein Glasfaserpapier angeordnet ist. Mit Hilfe eines Phenilharzes (hier nicht dargestellt) wird die Scheibe 30 zusätzlich an der Innenfläche des metallischen Gehäuses 12 befestigt. Anschließend wird das zwischen den Fasern der Scheibe 30 vorhandene Phenolharz verkokt. Die Verkokung findet unter Vakuum bei einer Temperatur von etwa 800 °C statt. Anschließend wird die Schwefelelektrode weiter ausgebildet, insbesondere der erforderliche Schwefel in den Kathodenraum 14 eingefüllt. Dies geschieht unter

Mp-Nr.608/84    7    0167966
05. Juli 1984

Anwendung eines Schleudergußverfahrens, bei dem der Schwefel flüssig in den Kathodenraum 14 eingefüllt wird, und zwar in einer solchen Menge, daß die Scheibe 30 vollständig damit getränkt wird. Anschließend wird die Speicherzelle 1 weiter zusammengebaut, insbesondere wird nun der Festelektrolyt 13 in das Gehäuse 12 eingesetzt. Die Abmessungen des Festelektrolyten sind so gewählt, daß die Scheibe 30 selbigen fest umschließt. Bei dem hier dargestellten Ausführungsbeispiel weist die Speicherzelle einen Innendurchmesser von 36 mm. Der Außendurchmesser des Festelektrolyten ist entsprechend kleiner gewählt. Der Innenraum des Festelektrolyten 3 dient als Anodenraum und wird mit Natrium gefüllt. Den Verschluß der Speicherzelle nach außenhin bildet der Verschlußdeckel 16. Im Bereich des Verschlußdeckels 16 ist der Festelektrolyt 13 über ein Glaslost (hier nicht dargestellt) mit einem metallischen Druckring 17 versehen. Dieser ist so breit gewählt, daß er nach dem Einsetzen des Festelektrolyten 13 in das metallische Gehäuse 12 mit der Innenfläche desselben verschweißt werden kann, wodurch der Kathodenraum vollständig verschlossen wird. In den Festelektrolyten 3 ragt ein anodischer Stromabnehmer 18 hinein, der nach außen geführt ist und über den Verschlußdeckel 16 einige Millimeter übersteht.

## Patentansprüche

1. Verfahren zur Herstellung einer elektrochemischen Speicherzelle (12) auf der Basis von Natrium und Schwefel mit einem Anodenraum (15) und einem Kathodenraum (14), die durch einen Festelektrolyten (13) voneinander getrennt und von einem metallischen Gehäuse (12) nach außenhin begrenzt sind, dadurch gekennzeichnet, daß ein in sich gefestigter Verbundkörper (1) aus elektrisch leitfähigen Fasern (3), deren Längsachsen im wesentlichen parallel zueinander verlaufen, gebildet und anschließend ein Teilstück (30) davon abgetrennt und so im Kathodenraum (15) angeordnet wird, daß die Längsachsen der Fasern (3) im wesentlichen senkrecht zur Längsachse des Festelektrolyten (13), insbesondere radial nach außen verlaufen.

2. Verfahren nach Anspruch 1, dadurch gekennzeichnet, daß der Verbundkörper (1) aus einer Vielzahl von aufeinandergeschichteten Graphitfasersträngen oder mehreren aufeinandergelegten Matten (2) aus Graphitfasern aufgebaut und anschließend mittels eines inerten oder verkokbaren Werkstoffes gefestigt wird, und daß hierbei Faserstränge und Matten (2) aus Graphitfasern auf Pechbases verwendet werden.

3. Verfahren nach einem der Ansprüche 1 oder 2, dadurch gekennzeichnet, daß der Verbundkörper (1) mittels eines Harzes, Fasern, Geweben oder Folien aus denen sich durch eine Wärmebehandlung unter Ausschluß von Sauerstoff glasariger Kohlenstoff oder Graphit bildet, gefestigt wird.

4. Verfahren nach Anspruch 1 oder 2, dadurch gekennzeichnet, daß der Verbundkörper (1) mit einem Duromer zunächst gefestigt und das Duromer anschließend im Kathodenraum (14) verkokt wird.

5. Verfahren nach Anspruch 4, dadurch gekennzeichnet, daß der Verbundkörper mit einem in Ethanol gelösten Phenolharz getränkt und gefestigt wird.

6. Verfahren nach den Ansprüchen 1 oder 2, dadurch gekennzeichnet, daß der Verbundkörper (1) aus mit einem Duromer benetzten Matten (2) oder Fassträngen gefertigt wird, und die Wärmebehandlung zum Aushärten des Duromers und das Abtrennen von Teilstücken (30) in einem kontinuierlichen Prozeß erfolgen.

7. Verfahren nach einem der Ansprüche 1 oder 2, dadurch gekennzeichnet, daß der Verbundkörper (1) durch Glasfasern, Glasfasergewebe, Glasfaserpapier, durch den Verbundkörper (1) gezogene Drähte aus Molybdän oder durch Drähte aus einer gegen Natriumpolysulfid korrossionsbeständigen Legierung mit hohem Chromanteil gefestigt wird.

8. Verfahren nach einem der Ansprüche 1 bis 7, dadurch gekennzeichnet, daß das im Kathodenraum (14) angeordnete Teilstück (30) des Verbundkörpers (1) mittels Phenolharz an dem metallischen Gehäuse (12) befestigt wird.

9. Verfahren nach einem der Ansprüche 1 oder 2, dadurch gekennzeichnet, daß der Verbundkörper aus Pechfasertauen gebildet wird, die mit einem Duromer besprüht werden.

1/2

0167966

Fig.1

## Fig. 2